# EUROPÄISCHE PATENTANMELDUNG

(11) **EP 4 800 496 A1**
(43) Veröffentlichungstag der Anmeldung: **02.09.2026**
(21) Anmeldenummer: 25160154.8
(22) Anmeldetag: 26.02.2025
(51) Int. Cl.: G05B 19/4097, B33Y 50/02, G05B 19/4099

(54) **VERFAHREN UND SYSTEM ZUR STEUERUNG EINES PROZESSES ZUR HERSTELLUNG EINES BAUTEILS**

(71) Anmelder: Technische Hochschule Deggendorf, in Vertretung des Freistaates Bayern, 94469 Deggendorf (DE)
(72) Erfinder: Urban, Nikolaus, 94469 Deggendorf (DE); Gansauge, Ludwig, 94469 Deggendorf (DE)
(74) Vertreter: Wolf, Gerhard

(57) **Zusammenfassung**

Die Erfindung betrifft ein computerimplementiertes Verfahren und ein System zur Steuerung eines Prozesses zur Herstellung eines Bauteils, wobei ein Farbtableau umfassend eine Vielzahl von gemäß einer Farbcodierungssystematik vergebenen Farben bereitgestellt wird, wobei den Farben jeweils eine Information zugeordnet ist, die eine Materialeigenschaft eine dreidimensionalen Bereichs des Bauteils charakterisiert. Ein dreidimensionales digitales Konstruktionsmodell des zu fertigenden Bauteils wird bereitgestellt, wobei zumindest einem dreidimensionalen Bereich des Konstruktionsmodells eine oder mehrere Farben des Farbtableaus zugeordnet sind, und dass über die zumindest eine Farbe mittels des Farbtableaus dem entsprechenden dreidimensionalen Bereich des zu fertigenden Bauteils eine Materialeigenschaft zugeordnet ist. Aus dem Farbtableau wird mittels der zumindest einen zugeordneten Farbe eine Materialeigenschaft ausgelesen und entsprechend ein Steuercode für eine das Bauteil fertigende Maschine erzeugt, so dass der dreidimensionale Bereich des Bauteils die aus dem Farbtableau ausgelesene Materialeigenschaft aufweist. Ein von der Maschine vollzogener Prozess wird basierend auf dem erzeugten Steuercode gesteuert.

## Beschreibung

Die Erfindung betrifft ein computerimplementiertes Verfahren und ein System zur Steuerung eines Prozesses zur Herstellung eines Bauteils.

Computerprogramme zur Erzeugung eines digitalen Konstruktionsmodells eines Bauteils sind grundsätzlich bekannt. Insbesondere sind CAD-Programme (CAD: computer-aided design) bekannt, mittels denen digitale Konstruktionsmodelle eines herzustellenden Bauteils oder eines aus mehreren Bauteilen zusammengesetzten Produkts erstellt werden können.

Des Weiteren ist es bekannt, bei der Konstruktion eines Bauteils im CAD-System PMI-Informationen (PMI: Product Modelling Information) hinzuzufügen. PMI-Informationen können Informationen umfassen, die zur Herstellung eines Bauteils nötig sind, beispielsweise Informationen zu Werkstoff, dem Werkstoffzustand, der Porosität des Materials etc. PMI-Informationen werden als Anmerkungen bzw. Label zu den jeweiligen Bereichen des Bauteils hinzugefügt, auf die sie sich beziehen, d.h. sind damit nicht unmittelbarer Bestandteil des Konstruktionsmodells.

Problematisch dabei ist, dass CAD-Systeme, Viewer, Dokumentensysteme etc. über die gesamte Prozesskette hinweg häufig nicht in der Lage sind, diese PMI-Informationen zu verarbeiten. Dies gilt insbesondere bei heterogenen Softwaresystemen für CAD und CAM (CAM: computer-aided manufacturing), d.h. die Konstruktion des Bauteils, z.B. mittels eines CAD-Programms zur Erstellung des digitalen Konstruktionsmodells, und die Erzeugung des NC-Codes, mittels dem eine Herstellungsmaschine bei der Herstellung des Bauteils gesteuert wird und der anhand des digitalen Konstruktionsmodells generiert wird, erfolgen mit unterschiedlich gearteten Softwareprodukten, die in Bezug auf PMI-Informationen nicht kompatibel sind.

Insbesondere bei Bauteilen, die keine homogenen Materialeigenschaften haben, kann es vorkommen, dass das digitale Konstruktionsmodell eine Vielzahl von PMI-Informationen aufweist, um die Materialeigenschaften von unterschiedlichen Bauteilbereichen spezifizieren zu können.

Problematisch hierbei ist, dass es insbesondere bei Bauteilen mit unterschiedlichen Materialeigenschaften aufwändig und fehleranfällig ist, die PMI-Informationen des Konstruktionsmodells in Informationen zur Steuerung des Herstellungsprozesses des Bauteils umzusetzen, da keine standardisierte Lösung zur automatisierten Nutzung der im digitalen Konstruktionsmodell enthaltenen PMI-Informationen existiert.

Ausgehend hiervon ist es Aufgabe der Erfindung, ein Verfahren zur Steuerung eines Prozesses zur Herstellung eines Bauteils anzugeben, mittels dem Materialeigenschaften, die im digitalen Konstruktionsmodell enthalten sind, automatisiert zur Steuerung eines maschinellen Herstellungsprozesses eines Bauteils auch über Systemschnittstellen hinweg verwendet werden können.

Die Aufgabe wird durch ein Verfahren mit den Merkmalen des unabhängigen Patentanspruchs 1 gelöst. Ein System zur Herstellung eines Bauteils ist Gegenstand des nebengeordneten Patentanspruchs 12. Bevorzugte Ausführungsformen sind Gegenstand der Unteransprüche. Gemäß einem ersten Aspekt bezieht sich die Erfindung auf ein computerimplementiertes Verfahren zur Steuerung eines Prozesses zur Herstellung eines Bauteils. Das Verfahren umfasst folgende Schritte:
Zunächst wird ein Farbtableau umfassend eine Vielzahl von gemäß einer Farbcodierungssystematik vergebenen Farben bereitgestellt. Den Farben ist jeweils eine Information zugeordnet, die eine Materialeigenschaft eines dreidimensionalen Bereichs eines Bauteils charakterisiert. Unter "Materialeigenschaft" wird dabei jegliche technische Eigenschaft eines Materials verstanden, die mittels eines Prozessparameters des Herstellungsprozesses beeinflussbar ist.

Zudem wird ein digitales Konstruktionsmodell des herzustellenden Bauteils bereitgestellt. Dieses Bereitstellen kann beispielsweise in Form einer CAD-Datei oder einer Datei eines sonstigen Konstruktionsprogramms erfolgen.

Zumindest einem dreidimensionalen Bereich des digitalen Konstruktionsmodells sind eine oder mehrere Farben des Farbtableaus zugeordnet. Diese Zuordnung bewirkt, dass über die zumindest eine Farbe mittels des Farbtableaus dem entsprechenden dreidimensionalen Bereich des zu fertigenden Bauteils eine Materialeigenschaft zugeordnet ist. **In** anderen Worten ergibt sich die Materialeigenschaft des dreidimensionalen Bereichs des zu fertigenden Bauteils nicht direkt aus dem Konstruktionsmodell beispielsweise durch eine Textinformation o.ä., sondern indirekt über die Farbe und der dieser Farbe über das Farbtableau zugeordneten Materialeigenschaft.

Anschließend wird ein Steuercode für eine das Bauteil fertigende Maschine erzeugt. Beim Erzeugen dieses Steuercodes wird die Materialeigenschaft, die der dreidimensionale Bereich des zu fertigenden Bauteils aufweisen soll, basierend auf dem Farbtableau bestimmt, und zwar durch Ermitteln der Materialeigenschaft, die im Farbtableau mit der Farbe verknüpft ist, die dem dreidimensionalen Bereich des digitalen Konstruktionsmodells des Bauteils zugeordnet ist. Der Steuercode für die Maschine wird derart erzeugt, dass bei einer Herstellung des Bauteils durch die Maschine basierend auf dem Steuercode der dreidimensionale Bereich des Bauteils die aus dem Farbtableau ausgelesene Materialeigenschaft aufweist. **In** anderen Worten bildet damit die Farbe des digitalen Konstruktionsmodells einen Code für die gewünschte Materialeigenschaft und das Farbtableau ermöglicht die Entschlüsselung des Farbcodes.

Zuletzt erfolgt das Steuern eines von der Maschine vollzogenen Prozesses basierend auf dem erzeugten Steuercode. Dies bedeutet insbesondere, dass Prozessparameter des Prozesses derart gewählt werden, dass das Material in dem dreidimensionalen Bereich des zu fertigenden Bauteils die im digitalen Konstruktionsmodell enthaltene Materialeigenschaft aufweist.

Der technische Vorteil des Verfahrens besteht darin, dass durch die Kodierung der Materialeigenschaften über Farben des Farbtableaus die Möglichkeit geschaffen wird, die Materialeigenschafts-Informationen durchgängig über die Schnittstellen zwischen der Software, mittels der das digitale Konstruktionsmodell erstellt wird (z.B. CAD-Programm), dem CAM-System, die den Steuercode gemäß dem digitalen Konstruktionsmodell erzeugt und ggf. einer Messeinrichtung, die basierend auf dem digitalen Konstruktionsmodell das hergestellte Bauteil vermisst, zu übertragen, da Farben mit deren Farbcode, im Unterschied zu PMI-Informationen, auch bei einer heterogenen Systemlandschaft eindeutig übergeben werden können. Dies kann beispielsweise mittels standardisierter Austauschformate (z.B. STEP242 ö.ä.) erfolgen. Damit sind die Informationen zu den Materialeigenschaften entlang der gesamten Prozesskette verfügbar und können zur automatisierten Herstellung und Vermessung des Bauteils verwendet werden.

Gemäß einem Ausführungsbeispiel wird nach dem Schritt des Steuerns eines von der Maschine vollzogenen Prozesses ein Messprozess an dem Bauteil vollzogen. Bei diesem Messprozess wird anhand der Farbe, die dem dreidimensionalen Bereich des digitalen Konstruktionsmodells zugeordnet ist, geprüft, ob bei dem entsprechenden dreidimensionalen Bereich des Bauteils die Materialeigenschaft, die durch die zumindest eine Farbe definiert wird, erfüllt ist. Damit kann über das digitale Konstruktionsmodell und die darin enthaltene Farbcodierung der Materialeigenschaften nicht nur der Herstellungsprozess gesteuert werden, sondern das hergestellte Bauteil auch hinsichtlich der Einhaltung der Materialeigenschaften, die im digitale Konstruktionsmodell festgelegt werden, geprüft werden.

Gemäß einem Ausführungsbeispiel weist das dreidimensionale digitale Konstruktionsmodell eine Vielzahl von diskreten Volumenbereichen auf, die diskrete dreidimensionale Volumenbereiche des zu fertigenden Bauteils repräsentieren. Diese diskreten Volumenbereiche können beispielsweise dreidimensionale Pixel, auch als Voxel bezeichnet, sein, aus denen der das Bauteil repräsentierende Körper im Konstruktionsmodell zusammengesetzt ist. Den diskreten Volumenbereichen des digitalen Konstruktionsmodells oder des daraus abgeleiteten Steuercodes ist jeweils eine Farbe des Farbtableaus zugeordnet, so dass über die Farbe mittels des Farbtableaus dem diskreten Volumenbereich des zu fertigenden Bauteils jeweils eine Materialeigenschaft zugeordnet ist. Dies hat den technischen Vorteil, dass das dreidimensionale Konstruktionsmodell mittels der Volumenbereiche diskretisiert wird und den einzelnen Volumenbereichen jeweils eine Farbe zugeordnet werden kann, so dass diesen Volumenbereichen jeweils eine Materialeigenschaft zugewiesen ist.

Gemäß einem Ausführungsbeispiel weist das dreidimensionale digitale Konstruktionsmodell eine Vielzahl von diskreten Volumenbereichen auf, die diskrete dreidimensionale Volumenbereiche des zu fertigenden Bauteils repräsentieren. Den diskreten Volumenbereichen des digitalen Konstruktionsmodells sind zumindest teilweise unterschiedliche Farben zugeordnet, so dass die Volumenbereiche im zu fertigenden Bauteil, die diesen diskreten Volumenbereichen des digitalen Konstruktionsmodells entsprechen, unterschiedliche Materialeigenschaften aufweisen. Damit ist es möglich, mittels der Farbcodierung automatisiert einen Herstellungsprozess eines Bauteils zu steuern, das ortsabhängig Materialien mit unterschiedlichen Materialeigenschaften umfasst, beispielsweise ortsabhängige Volumenbereiche mit Material unterschiedlicher Porosität, Härte, unterschiedlichen Dämpfungseigenschaften etc.

Gemäß einem Ausführungsbeispiel erfolgt das Steuern eines von der Maschine vollzogenen Prozesses ortsselektiv basierend auf Materialeigenschaften, die den diskreten Volumenbereichen des dreidimensionalen digitalen Konstruktionsmodells über die Farben zugeordnet sind. Damit ist es möglich, automatisiert ein dreidimensionales Bauteil herzustellen, das ortsabhängig unterschiedliche Materialeigenschaften aufweist, wobei diese Materialeigenschaften im digitalen Konstruktionsmodell des Bauteils bereits hinterlegt sind. Dies führt zu sehr genauen und überprüfbaren Materialeigenschaften des Bauteils.

Gemäß einem Ausführungsbeispiel ist die Materialeigenschaft, die durch die Farbe repräsentiert wird:
- die Porosität des Materials;
- die mechanische Dämpfungseigenschaft des Materials;
- eine elektrische, thermische, optische und/oder magnetische Eigenschaft des Materials;
- die Härte des Materials;
- die Zähigkeit des Materials;
- die Elastizität des Materials und/oder
- der innere Spannungszustand des Materials.

Es versteht sich, dass diese Materialeigenschaften rein beispielhaft zu verstehen sind und auch beliebige andere Materialeigenschaften auf die beschriebene Weise kodierbar sind.

Gemäß einem Ausführungsbeispiel gibt die Materialeigenschaft einen Werkstoff, einen Werkstoffzustand, eine Materialstrukturinformation, einen Materialtyp und/oder die Phasen einer Legierung an. Es versteht sich, dass eine Farbe auch gleichzeitig mehrere Materialeigenschaften definieren kann, beispielsweise einen Materialtyp und dessen Porosität.

Gemäß einem Ausführungsbeispiel umfasst das Farbtableau zumindest eine Farbleiter, die eine Startfarbe, eine Endfarbe und zwischen der Startfarbe und der Endfarbe liegende Zwischenfarben aufweist. Die Startfarbe definiert ein erstes Ende der Farbleiter, die Endfarbe ein zweites Ende der Farbleiter. Der Startfarbe ist ein Startwert der Materialeigenschaft und der Endfarbe ein Endwert der Materialeigenschaft zugeordnet. Zumindest einem Teil der zwischen der Startfarbe und der Endfarbe liegenden Zwischenfarben ist ein Satz von Zwischenwerten der Materialeigenschaft zugeordnet. Die Zwischenwerte definieren dabei Werte der Materialeigenschaft, die zwischen dem Startwert und dem Endwert der Materialeigenschaft liegen. Damit können durch die Farbleiter eine Vielzahl von Werten einer Materialeigenschaft abgebildet werden.

Gemäß einem Ausführungsbeispiel sind die Startfarbe und die Endfarbe der Farbleiter durch einen numerischen Farbcode umfassend zumindest drei Farbcodewerte definiert. Die Zwischenfarben der Farbleiter werden dadurch gebildet, dass zwei Farbcodewerte, die jeweils die Startfarbe und die Endfarbe aufweisen, auch bei den Zwischenfarben konstant gehalten werden und ein dritter Farbcodewert zur Bildung unterschiedlicher Zwischenfarben variiert wird. **In** anderen Worten sind zumindest zwei Farbcodewerte bei allen Farben der Farbleiter gleich und die unterschiedlichen Farben der Farbleiter werden dadurch gebildet, dass ein dritter Farbcodewert verändert wird und damit die Farbcodes der unterschiedlichen Farben der Farbleiter definiert werden. Damit wird eine schrittweise Änderung der Farben entlang der Farbleiter von der Startfarbe zur Endfarbe hin erreicht, aber der Farbraum eineindeutig, systematisch und platzsparend genutzt.

Gemäß einem Ausführungsbeispiel sind die aufeinander folgenden Zwischenfarben der Farbleiter äquidistant angeordnet. Dabei weisen zwei in der Farbleiter aufeinanderfolgende Zwischenfarben jeweils den gleichen, ganzzahligen Differenzwert des dritten Farbcodewerts auf. In anderen Worten ist die Schrittweite des dritten Farbcodewerts zwischen zwei aufeinanderfolgenden Zwischenfarben gleich. Die Schrittweite kann von der Anzahl der Werte der Materialeigenschaft abhängen, die durch die Farbleiter kodiert werden. Der ganzzahlige Differenzwert bzw. die Schrittweite kann eins (Ziffer 1) oder ein ganzzahliges Vielfaches von eins sein. Dadurch werden die Zwischenfarben gleichmäßig und systematisch zwischen der Startfarbe und der Endfarbe verteilt festgelegt.

Gemäß einem Ausführungsbeispiel umfasst das Farbtableau einen Satz von mehreren Farbleitern, die jeweils eine Startfarbe und eine Endfarbe aufweisen. Die Startfarbe und die Endfarbe der Farbleitern sind jeweils durch einen numerischen Farbcode umfassend zumindest drei Farbcodewerte definiert. Die Farbleitern des Satzes von Farbleitern weisen jeweils eine Startfarbe auf, bei denen zumindest zwei Farbcodewerte gleich sind und ein dritter Farbcodewert variiert wird, um die Startfarben der Farbleitern zu verändern. Der dritte Farbcodewert, mittels dem sich die Startwerte der Farbleitern voneinander unterscheiden, ist ein anderer Farbcodewert als derjenige, der zur Bildung der Zwischenfarben zwischen der Startfarbe und der Endfarbe der jeweiligen Farbleiter verwendet wird. Die dritten Farbcodewerte der aufeinander folgenden Farbleitern des Satzes von Farbleitern weisen vorzugsweise jeweils die gleiche Schrittweite bzw. den gleichen Differenzwert auf.

Gemäß einem Ausführungsbeispiel sind jeder Farbleiter des Satzes von Farbleitern unterschiedliche Arten von Materialinformationen zugeordnet. Damit ist es möglich, mit dem Farbtableau eineindeutig, systematisch und platzsparend eine Vielzahl von unterschiedlichen Materialinformationen zu kodieren.

Gemäß einem weiteren Aspekt wird ein System zur Herstellung eines Bauteils offenbart. Das System umfasst zumindest eine Maschine, die einen Prozess zur Herstellung des Bauteils vollzieht und eine Steuereinheit, mittels der die Maschine gesteuert wird. Das System ist dazu konfiguriert, die folgenden Schritte zu vollziehen:
Zunächst wird ein Farbtableau umfassend eine Vielzahl von gemäß einer Farbcodierungssystematik vergebenen Farben geladen. Den Farben ist jeweils eine Information zugeordnet, die eine Materialeigenschaft eines dreidimensionalen Bereichs des Bauteils charakterisiert.

Des Weiteren wird ein dreidimensionales digitales Konstruktionsmodell des zu fertigenden Bauteils geladen. Zumindest einem dreidimensionalen Bereich des digitalen Konstruktionsmodells sind eine oder mehrere Farben des Farbtableaus zugeordnet, so dass über die zumindest eine Farbe mittels des Farbtableaus dem entsprechenden dreidimensionalen Bereich des zu fertigenden Bauteils eine Materialeigenschaft zugeordnet ist.

Anschließend wird die Materialeigenschaft, die der dreidimensionale Bereich des zu fertigenden Bauteils aufweisen soll, aus dem Farbtableau ausgelesen, und zwar mittels der zumindest einen Farbe, die dem dreidimensionalen Bereich des digitalen Konstruktionsmodells des Bauteils zugeordnet ist. Dabei wird im Farbtableau die Materialeigenschaft ermittelt, die der Farbe zugeordnet ist, die dem dreidimensionalen Bereich des Bauteils im Konstruktionsmodell zugewiesen ist.

Daraufhin wird ein Steuercode für die Maschine erzeugt, die das Bauteil fertigt. Der Steuercode wird derart erzeugt, dass bei einer Herstellung des Bauteils durch die Maschine basierend auf dem Steuercode der dreidimensionale Bereich des Bauteils die aus dem Farbtableau ausgelesene Materialeigenschaft aufweist.

Basierend auf dem erzeugten Steuercode wird anschließend ein von der Maschine vollzogener Prozess gesteuert.

Gemäß einem Ausführungsbeispiel umfasst das System eine Messeinrichtung zur Messung von Materialeigenschaften eines von der Maschine hergestellten Bauteils. Die Messeinrichtung weist eine Steuereinheit auf, die dazu konfiguriert ist, einen Messprozess zur Messung von Materialeigenschaften des Bauteils zu steuern. Die Steuereinheit ist dazu ausgebildet, die folgenden Schritte zu vollziehen:
- Laden eines Farbtableaus umfassend eine Vielzahl von gemäß einer Farbcodierungssystematik vergebenen Farben, wobei den Farben jeweils eine Information zugeordnet ist, die eine Materialeigenschaft eines dreidimensionalen Bereichs des Bauteils charakterisiert;
- Laden eines dreidimensionalen digitalen Konstruktionsmodells des Bauteils, wobei zumindest einem dreidimensionalen Bereich des digitalen Konstruktionsmodells eine oder mehrere Farben des Farbtableaus zugeordnet sind, so dass über die zumindest eine Farbe mittels des Farbtableaus dem entsprechenden dreidimensionalen Bereich des Bauteils eine Materialeigenschaft zugeordnet ist;
- Auslesen der Materialeigenschaft, die ein dreidimensionaler Bereich des Bauteils aufweisen soll, aus dem Farbtableau mittels der zumindest einen Farbe, die dem entsprechenden dreidimensionalen Bereich des digitalen Konstruktionsmodells des Bauteils zugeordnet ist;
- Durchführen zumindest eines Messschrittes an dem dreidimensionalen Bereich des Bauteils und Prüfen, ob der dreidimensionale Bereich des Bauteils die ausgelesene Materialeigenschaft aufweist.

Dadurch ist es möglich, basierend auf der Farbe des dreidimensionalen Bereichs des Bauteils im Konstruktionsmodell oder im Steuercode auch zu prüfen, ob das hergestellte Bauteil die geforderten Materialeigenschaften aufweist.

Gemäß einem Ausführungsbeispiel weist das dreidimensionale digitale Konstruktionsmodell des Bauteils eine Vielzahl von diskreten Volumenbereichen auf, die diskrete dreidimensionale Volumenbereiche des zu fertigenden Bauteils repräsentieren. Den diskreten Volumenbereichen des digitalen Konstruktionsmodells sind zumindest teilweise unterschiedliche Farben zugeordnet, so dass den diskreten Volumenbereichen über das Farbtableau unterschiedliche Materialeigenschaften zugewiesen sind. Das System ist zudem dazu ausgebildet ist, das Bauteil zumindest partiell mittels eines Prozesses herzustellen, bei dem die Prozessparameter variierbar sind, wobei die Steuereinheit dazu ausgebildet ist, die Prozessparameter gemäß dem Steuercode zu variieren, so dass dadurch diskrete dreidimensionale Volumenbereiche im zu fertigenden Bauteil erzeugt werden, die die unterschiedlichen Materialeigenschaften, die den diskreten Volumenbereichen des digitalen Konstruktionsmodells zugeordnet sind, aufweisen. Damit ist es möglich, ein Bauteil mit dreidimensionalen Strukturen und unterschiedlichen Materialeigenschaften in den dreidimensionalen Strukturen herzustellen.

Gemäß einem Ausführungsbeispiel ist die Maschine zur Durchführung eines additiven Fertigungsverfahrens ausgebildet. Bei einem additiven Fertigungsverfahren ist es vorteilhaft möglich, Prozessparameter derart zu ändern, dass das Material im Volumen des Bauteils beispielsweise unterschiedliche Materialeigenschaften aufweist.

Unter "Konstruktionsmodell" im Sinne der vorliegenden Offenbarung wird ein vorzugsweise dreidimensionales, digitales Modell eines Bauteils verstanden. Ein Konstruktionsmodell kann durch ein CAD-Programm erstellt sein und definiert die geometrische Beschaffenheit des Bauteils basierend auf Nennmaßen.

Unter "Farbtableau" im Sinne der vorliegenden Offenbarung wird eine Zusammenstellung einer Vielzahl von unterschiedlichen Farben verstanden, die sich durch die Änderung der Farbwerte der Grundfarben eines Farbmodells erreichen lassen. Das Farbmodell kann beispielsweise ein RGB-Farbmodell oder ein CMYK-Farbmodell sein.

Unter "Farbleiter" im Sinne der vorliegenden Offenbarung wird ein Satz von mehreren Farben verstanden, der eine Startfarbe, eine Endfarbe und eine Vielzahl von Zwischenfarben aufweist, die in dem Farbmodell, das dem Farbtableau zugrunde liegt, zwischen der Startfarbe und der Endfarbe liegen.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft ein Konstruktionsmodell eines Bauteils mit farbcodierten dreidimensionalen Volumenbereichen;
- Fig. 2: beispielhaft und schematisch ein Farbtableau mit mehreren Feldern, denen über einen Farbcode eindeutige Farben zugeordnet sind;
- Fig. 3: beispielhaft eine Farbleiter eines Farbtableaus, der Materialeigenschaften in Form von Porositätswerten zugeordnet sind;
- Fig. 4: beispielhaft zwei Farbleitern eines Farbtableaus, wobei einer ersten Farbleiter Materialeigenschaften in Form von Zugfestigkeitswerten und einer zweiten Farbleiter Materialeigenschaften in Form von Porositätswerten zugeordnet sind;
- Fig. 5: beispielhaft eine schematische Darstellung eines ersten Prozesses zur Herstellung eines Bauteils;
- Fig. 6: beispielhaft eine schematische Darstellung eines zweiten Prozesses zur Herstellung eines Bauteils;
- Fig. 7: beispielhaft eine schematische Darstellung eines Systems zur Herstellung und Vermessung eines Bauteils; und
- Fig. 8: ein schematisches Blockdiagramm zur Veranschaulichung der Schritte eines Verfahrens zur Steuerung eines Herstellungsprozesses.

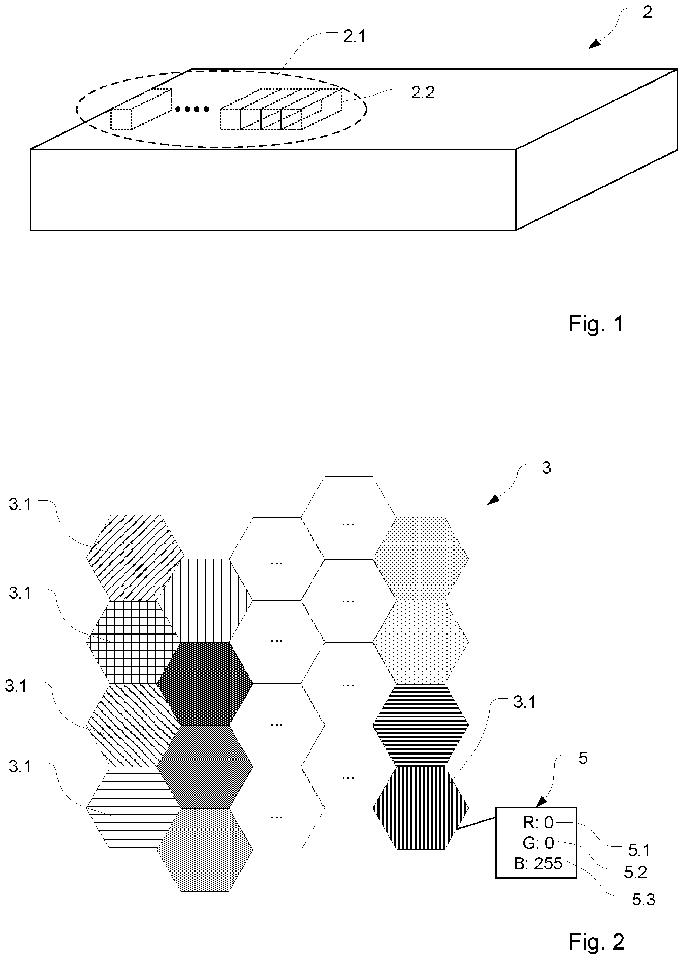

Figur 1 zeigt beispielhaft eine zweidimensionale Darstellung eines Konstruktionsmodells 2 eines Bauteils 1. Ein Bauteil 1 kann einstückig gebildet oder aber aus mehreren Komponenten zusammengesetzt sein. Das Konstruktionsmodell 2 kann beispielsweise mittels eines CAD-Programms erstellt worden sein. Das Konstruktionsmodell 2 umfasst einen dreidimensionalen Bereich 2.1, der beispielsweise einen oder mehrere diskreter Volumenbereiche 2.2 aufweist. Die Volumenbereiche 2.2 können beispielsweise dreidimensionale Pixel sein, wobei durch Aneinanderreihung mehrerer derartiger Pixel der dreidimensionale Bereich 2.1 im Konstruktionsmodell 2 gebildet wird. Der dreidimensionale Bereich 2.1 des Konstruktionsmodells 2 repräsentiert einen dreidimensionalen Bereich 1.1 des Bauteils 1, d.h. der dreidimensionale Bereich 2.1 des Konstruktionsmodells 2 gibt an, welche Form und Größe der dreidimensionale Bereich 1.1 des Bauteils 1 aufweisen soll.

Das Konstruktionsmodell 2 weist Informationen zu Materialeigenschaften auf, die ein dreidimensionaler Bereich 1.1 des Bauteils 1 aufweisen soll, das durch das Konstruktionsmodell 2 repräsentiert wird. Insbesondere kann das Bauteil 1 inhomogene Materialeigenschaften aufweisen, d.h. ein erster dreidimensionaler Bereich 1.1 des Bauteils 1 weist andere Materialeigenschaften auf als ein zweiter dreidimensionaler Bereich 1.1. So kann beispielsweise der erster dreidimensionale Bereich 1.1 des Bauteils 1 aus einem anderen Material bestehen als ein zweiter dreidimensionaler Bereich 1.1 des Bauteils 1. Dies kann beispielsweise bei additiv gefertigten Bauteilen der Fall sein.

Zur Zuweisung einer Information bezüglich der Materialeigenschaften zu dem dreidimensionale Bereich 2.1 des Konstruktionsmodells 2 wird ein Farbtableau 3 verwendet. Fig. 2 zeigt beispielhaft einen Auszug aus einem solchen Farbtableau 3, wobei die Farbfelder durch unterschiedliche Schraffuren ersetzt wurden. Es versteht sich, dass jeweils eine Schraffur eine bestimmte Farbe darstellen soll.

Das Farbtableau 3 fußt auf einem Farbmodell, beispielsweise dem RGB-Farbmodell oder dem CMY/CMYK-Farbmodell. Es umfasst eine Vielzahl von Feldern, wobei die Felder jeweils unterschiedliche Farben 3.1 aufweisen. Die Farben 3.1 der Felder sind jeweils durch einen Farbcode 5 eindeutig festgelegt, wobei der Farbcode 5 die Farbe basierend auf den Farbbestandteilen oder Grundfarben des jeweiligen Farbmodells definiert.

In dem RGB-Farbmodell kann eine Farbe beispielsweise durch drei Farbcodewerte 5.1, 5.2, 5.3 definiert werden, die die Anteile der Grundfarben Rot (R), Grün (G), und Blau (B) in der jeweiligen Farbe repräsentieren. Das Farbtableau kann einen Teil des Farbraums des jeweiligen Farbmodells oder den gesamten Farbraum überspannen.

Den Farben 3.1 und damit den Feldern des Farbtableaus 3 ist zumindest teilweise jeweils eine Materialeigenschaft zugeordnet. Die Materialeigenschaft ist eine Information, die festlegt, welche Eigenschaften das Material des Bauteils 1 in einem Bauteilbereich haben soll, dem diese Farbe 3.1 zugeordnet ist. In anderen Worten ist aufgrund der Zuordnung der Materialeigenschaft zu der jeweiligen Farbe 3.1 des Farbtableaus 3 die Farbe mit einer Information belegt, die Materialeigenschaften eines Bauteilbereichs definiert. Beispiele für Materialeigenschaften sind:
- die Porosität des Materials;
- die mechanische Dämpfungseigenschaft des Materials;
- eine elektrische Eigenschaft des Materials;
- eine thermische Eigenschaft des Materials;
- eine optische Eigenschaft des Materials;
- eine magnetische Eigenschaft des Materials;
- die Härte des Materials;
- die Zähigkeit des Materials;
- die Elastizität des Materials;
- der innere Spannungszustand des Materials;
- der Werkstoff;
- ein Werkstoffzustand;
- eine Materialstrukturinformation (z.B. Kornorientierung, Mikrogefüge, Textur);
- ein Materialtyp;
- die Phasen einer Legierung;
- die Faserorientierung (z.B. bei glasfaserhaltigen Kunststoffteilen) etc.

Durch die Zuordnung einer Farbe 3.1 des Farbtableaus 3 zu einem dreidimensionale Bereich 2.1 des Konstruktionsmodells 2 ist diesem dreidimensionalen Bereich 2.1 des Konstruktionsmodells 2 über das Farbtableau 3 eine Materialeigenschaft zugeordnet, und zwar die Materialeigenschaft, die der dreidimensionale Bereich 1.1 des zu fertigenden Bauteils 1 haben soll. Damit definiert das Konstruktionsmodell 2 nicht nur geometrische Eigenschaften des zu fertigenden Bauteils 1, sondern durch die Farbe 3.1 wird dem dreidimensionalen Bereich 2.1 des Konstruktionsmodells 2 über das Farbtableau 3 auch eine Information bzgl. der Materialeigenschaft zugeordnet. Die Verwendung einer Farbe als Informationsträger hat den Vorteil, dass eine Informationsübertragung auch bei heterogenen Systemen (beispielsweise zwischen CAD und CAM) möglich ist, da bei heterogenen Systemen die Farben eindeutig übergeben werden und damit die Information zur Materialeigenschaft entlang der Prozesskette systemunabhängig ausgelesen werden kann.

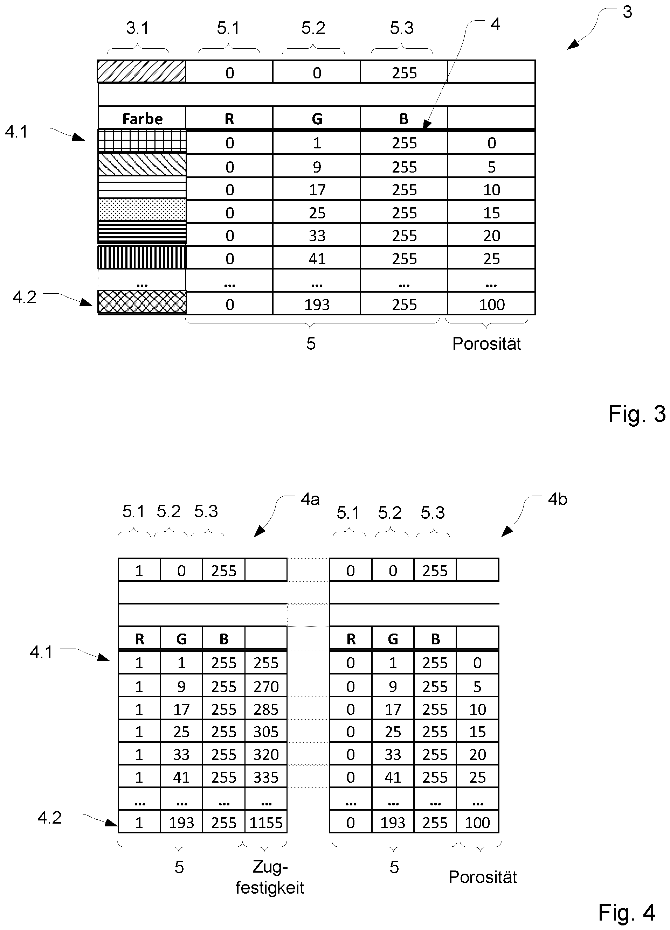

Fig. 3 zeigt einen Auszug aus einem beispielhaften Farbtableau 3 in tabellarischer Form, bei dem den Feldern des Farbtableaus 3 eine Materialeigenschaft in Form der Porosität (Angabe in %) zugeordnet sind. Der Auszug des Farbtableaus 3 bildet eine Farbleiter 4, die einer Farbcodierungssystematik folgt. Die Farbleiter 4 weist eine Startfarbe 4.1 und eine Endfarbe 4.2 auf. Die Startfarbe 4.1 und die Endfarbe 4.2 sind durch die Farbcodewerte 5.1, 5.2, 5.3 gemäß der gewählten Farbcodierung vorgegeben. Das beschriebene Beispiel nutzt das RGB-Farbmodell, so dass ein Farbcode durch folgendes Schema vorgegeben ist: (R:xxx; G:yyy; B:zzz), wobei xxx für den Rotanteil, yyy für den Grünanteil und zzz für den Blauanteil der jeweiligen Farbe steht.

Durch die Farbleiter 4 der Fig. 3 werden mittels der Farben 3.1 mögliche Porositätswerte kodiert. Es versteht sich, dass die Farbleiter 4 länger oder kürzer sein kann, um diese an die jeweilige Menge an abzubildenden Materialeigenschaften, die in dem gezeigten Ausführungsbeispiel Porositätswerte sind, anzupassen.

Die linke Spalte der Tabelle gemäß Fig. 3 verdeutlicht die Farbe 3.1 (nachgebildet durch unterschiedliche Schraffuren), die zweite bis vierte Spalte (von links) die Farbcodewerte 5.1, 5.2, 5.3 des Farbcodes 5. In der fünften Spalte sind der jeweiligen Farbe 3.1 beispielhaft Materialeigenschaften in Form von Porositätswerten zugeordnet.

Die Farbleiter 4 weist zwischen der Startfarbe 4.1 und der Endfarbe 4.2 eine Vielzahl von Zwischenfarben auf. Gemäß der vorgeschlagenen Farbcodierungssystematik werden die Zwischenfarben der Farbleiter 4 dadurch erhalten, dass zwei Farbcodewerte 5.1, 5.3 konstant gehalten werden und ein dritter Farbcodewert 5.2 (Grün-Wert) schrittweise erhöht wird. Das Erhöhen des dritten Farbcodewerts 5.2 erfolgt vorzugsweise mit einer diskreten Schrittweite. Im gezeigten Ausführungsbeispiel beträgt die Schrittweite 8, kann aber auch abweichend davon größer oder kleiner gewählt sein, beispielsweise Schrittweite 1. Da die Farbe mit dessen Farbcode 5 eindeutig ist, kann diese schnittstellenunabhängig zur Weitergabe einer Vielzahl von Informationen genutzt werden, wobei die Informationen durch das Farbtableau 3, die als look-up-Tabelle fungiert, zur Verfügung gestellt werden.

Für den Fall, dass ein dreidimensionaler Bereich 1.1 des zu fertigenden Bauteils 1 eine Porosität von 20% aufweisen soll, kann dem dreidimensionalen Bereich 2.1 des Konstruktionselements 2, das dem dreidimensionalen Bereich 1.1 des zu fertigenden Bauteils 1 entspricht, die Farbe 3.1 mit den Farbcodewerten 5.1, 5.2, 5.3 "0", "33" und "255" zugeordnet werden. Vorzugsweise wird der dreidimensionale Bereich 2.1 des Konstruktionselements 2 mit dieser Farbe 3.1 auch eingefärbt. Dadurch ist dem dreidimensionalen Bereich 2.1 des Konstruktionselements 2 eine Materialinformation beigefügt, die gemäß der beispielhaften Farbleiter 4 angibt, mit welcher Porosität ein dreidimensionaler Bereich 1.1 des zu fertigenden Bauteils 1 herzustellen ist.

Wird basierend auf dem Konstruktionsmodell 2 ein Bauteil hergestellt, und zwar beispielsweise derart, dass von einem CAD-Modell (das beispielsweise das Konstruktionsmodell 2 bildet) ein Steuercode (z.B. ein NC-Code für eine CNC-Maschine oder eine additive Fertigungsmaschine) abgeleitet wird, kann über die dem dreidimensionale Bereich 2.1 zugeordnete Farbe 3.1 und dem Farbtableau 3 die gewünschte Materialeigenschaft ausgelesen und basierend auf dieser eine Maschine 10 gesteuert werden, mittels der das Bauteil 1 hergestellt wird.

Fig. 4 zeigt ein weiteres Ausführungsbeispiel eines Farbtableaus 3, das mehrere Farbleitern 4a, 4b umfasst, mittels denen mehrere unterschiedliche Materialeigenschaften abbildbar sind. Zur besseren Übersichtlichkeit sind bei Fig. 4 die Farbfelder nicht dargestellt. Es versteht sich aber, dass den Zeilen der Farbleitern 4a, 4b jeweils durch die Farbcodewerte 5.1, 5.2, 5.3 definierte Farben 3.1 zugeordnet sind.

In dem in Fig. 4 gezeigten Ausführungsbeispiel bezieht sich eine erste Farbleiter 4a auf die Materialeigenschaft "Zugfestigkeit" und eine zweite Farbleiter 4b auf die Materialeigenschaft "Porosität". Den Farben 3.1 der Farbleitern 4a, 4b sind damit unterschiedliche Materialeigenschaften zugeordnet, und zwar jeweils in der Farbleiter 4a, 4b in der letzten Spalte,

Die Zugfestigkeit ist in der Einheit [N/mm²], die Porosität in Prozent angegeben.

Die Farbleitern 4a, 4b weisen jeweils zwei konstante Farbcodewerte 5.1 und 5.3 auf, im gezeigten Ausführungsbeispiel die Rot- und Blau-Anteile. Der Farbcodewert 5.2 wird zur Bildung der Zwischenfarben variiert, im gezeigten Ausführungsbeispiel in 8-ter-Schritten von 1 bis 193. Es versteht sich, dass die Länge der Farbleitern 4a, 4b variieren und die Schrittweite größer oder kleiner sein kann.

Die Verwendung von Farbleitern 4 hat den technischen Vorteil, dass eine Vielzahl von Materialeigenschaften in einer tabellenartigen Struktur farbcodiert und in einem digitalen Konstruktionsmodell 2 verwendet werden können, wobei der Farbcode 5 den technischen Vorteil bietet, dass dieser über Softwareschnittstellen hinweg direkt übertragbar ist (z.B. vom CAD-Modell in den Steuercode der Maschine 10). Damit kann basierend auf diesen Materialeigenschaften ein Herstellungsprozess der Maschine 10 gesteuert werden, und zwar derart, dass die Maschine 10 ein Bauteil 1 herstellt, das in dem dreidimensionalen Bereich 1.1 Materialeigenschaften aufweist, die gemäß dem Farbtableau 3 der Farbe 3.1 entsprechen, die dem dreidimensionalen Bereich 2.1 des Konstruktionsmodells 2 zugeordnet ist.

Nachfolgend wird die Verwendung des zuvor beschriebenen Farbtableaus 3 in einem Prozess zur Herstellung eines Bauteils 1 beschrieben.

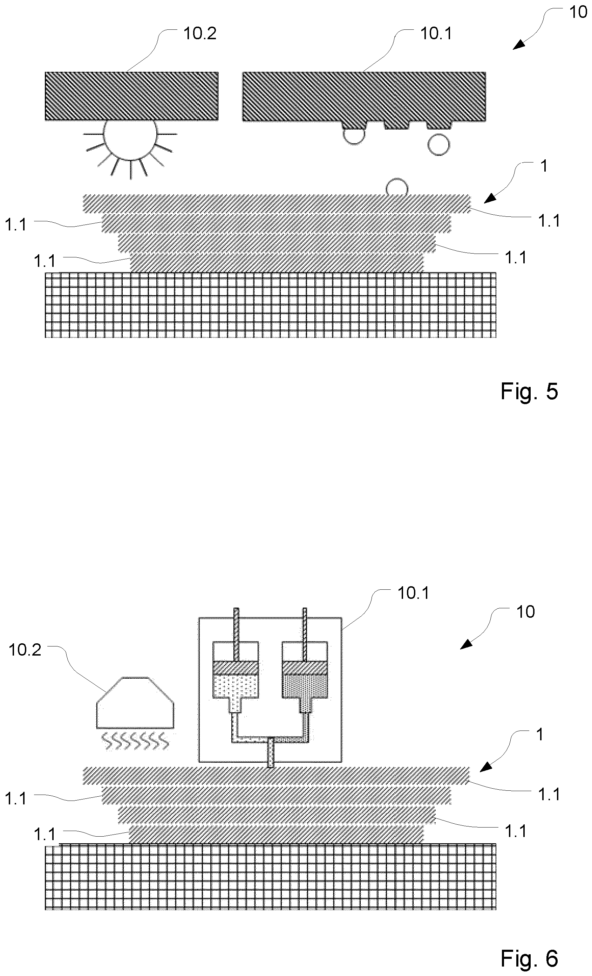

Fig. 5 zeigt beispielhaft und grob schematisch eine Maschine 10 zur Herstellung eines Bauteils 1. Die Maschine 10 weist eine Abgabeeinheit 10.1 auf, mittels der ein ortsabhängiger Materialauftrag erfolgen kann. Das aufgetragene Material kann insbesondere ein Material sein, das einem Härteprozess unterzogen werden muss, um eine Aushärtung zu bewirken.

Hierzu umfasst die Maschine 10 gemäß Fig. 5 eine Aushärteeinheit 10.2 mittels der die Aushärtung des applizierten Materials bewirkt wird. Die Aushärteeinheit 10.2 kann beispielsweise eine UV-Lichtquelle und/oder eine Heizeinrichtung umfassen.

Um ein Bauteil 1 mit gewünschten Materialeigenschaften zu schaffen, kann es notwendig sein, die Menge des von der Abgabeeinheit 10.1 applizierten Materials und/oder die Aushärtung des Materials abhängig von dem Bauteilbereich, der hergestellt wird, zu steuern. Hierzu können Materialeigenschaften, die in dem dreidimensionalen Konstruktionsmodell 2 farbcodiert vorhanden sind, in einem Steuercode derart in Steuerbefehle der Maschine umgesetzt werden, um mittels des Steuercodes den Herstellungsprozess des Bauteils 1 selektiv zu steuern und dadurch zu erreichen, dass das herzustellende dreidimensionale Bauteil 1 ortsselektiv die im digitalen Konstruktionsmodell 2 vorgegebenen Materialeigenschaften aufweist.

Fig. 6 zeigt eine weitere Maschine 10, die zur Herstellung eines Bauteils 1 eingerichtet ist. Die Maschine 10 weist eine Abgabeeinheit 10.1 auf, bei der durch eine Mischung mehrerer Materialkomponenten erfolgt, wobei das Mischverhältnis einstellbar ist, und zwar derart, dass ortsselektiv ein Materialauftrag mit unterschiedlichem Mischverhältnis erfolgen kann.

Das aufgetragene Material kann wiederum ein Material sein, das einem Härteprozess unterzogen werden muss, um eine Aushärtung zu bewirken. Hierzu umfasst die Maschine 10 gemäß Fig. 6 ebenfalls eine Aushärteeinheit 10.2, mittels der die Aushärtung des applizierten Materials bewirkt wird. Die Aushärteeinheit 10.2 kann beispielsweise eine UV-Lichtquelle und/oder eine Heizeinrichtung umfassen.

Um ein Bauteil 1 mit gewünschten Materialeigenschaften zu schaffen, kann die Abgabeeinheit 10.1 derart gesteuert werden, dass das Mischverhältnis des applizierten Materials ortsselektiv gesteuert wird. Für diese ortsselektive Steuerung können Materialeigenschaften, die in dem dreidimensionalen Konstruktionsmodell 2 farbcodiert vorhanden sind, in einem Steuercode in Steuerbefehle der Maschine 10 umgesetzt werden. Der basierend auf dem digitalen Konstruktionsmodell 2 und dem Farbtableau 3 erzeugte Steuercode ermöglicht, dass das herzustellende dreidimensionale Bauteil 1 ortsselektiv die im digitalen Konstruktionsmodell 2 vorgegebenen Materialeigenschaften aufweist.

Ein weiteres Beispiel für eine Maschine 10 zur Herstellung eines Bauteils ist beispielsweise ein 3D-Drucker, der ein SLM-Verfahren (SLM: engl. selective laser melting) oder ein anderes additives Herstellverfahren vollzieht. Dabei kann beispielsweise die Laserleistung ortsselektiv gesteuert werden, um eine im Konstruktionsmodell 2 durch die Farbcodierung vorgegebene Porosität des Materials zu erreichen.

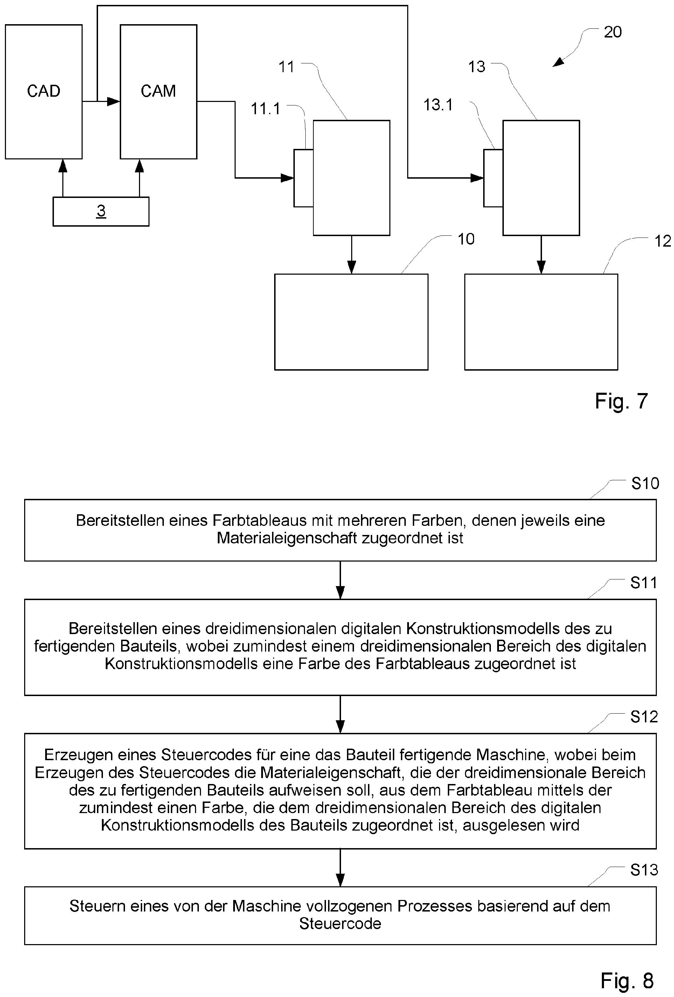

Fig. 7 zeigt grob schematisch ein System 20 zur Herstellung eines Bauteils 1. Das System 20 weist eine Eingangsschnittstelle 11.1 auf, über die ein Steuercode für die jeweilige Maschine (z.B. ein NC-Code) geladen werden kann. Dieser wird beispielsweise aus einem digitalen Konstruktionsmodell 2, das von einem CAD-System (Block CAD in Fig. 7) bereitgestellt wird, durch ein CAM-System (Block CAM in Fig. 7) unter Berücksichtigung des Farbtableaus 3 erzeugt. Das System 20 weist darüber hinaus eine Maschine 10 auf, die von einer Steuereinheit 11 gesteuert wird. Der Steuercode wird der Steuereinheit 11 zugeleitet bzw. durch diese Steuereinheit geladen. Wie zuvor beschrieben, weist der Steuercode Steuerbefehle auf, so dass bei einer Herstellung des Bauteils 1 durch die Maschine 10 basierend auf dem Steuercode der dreidimensionale Bereich 1.1 des Bauteils 1 die im digitalen Konstruktionsmodell über die Farbe kodierte Materialeigenschaft aufweist.

Das digitale Konstruktionsmodell 2 des Bauteils 1, das vom CAD-System bereitgestellt wird, umfasst zumindest einen dreidimensionalen Bereich 2.1, dem eine Farbe 3.1 des Farbtableaus 3 zugeordnet ist.

Basierend auf dem Farbtableau 3 und der Farbe 3.1 des dreidimensionalen Bereichs 2.1 des Konstruktionselements 2 ist es nun möglich, die Materialeigenschaft zu bestimmen, die der dreidimensionale Bereich 1.1 des Bauteils 1 aufweisen soll, der dem dreidimensionalen Bereich 2.1 des Konstruktionsmodells 2 entspricht. Dazu wird der Farbcode 5 der Farbe 3.1 des dreidimensionalen Bereich 2.1 des Konstruktionsmodells 2 extrahiert und basierend auf dem Farbtableau 3 durch das CAM-System bestimmt, welche Materialeigenschaft der dreidimensionale Bereich 1.1 des Bauteils 1 aufzuweisen hat. Das CAM-System setzt die zu erreichende Materialeigenschaft des dreidimensionalen Bereichs 1.1 des Bauteils 1 basierend auf prozesstechnologischen Informationen, die im CAM-System vorhanden sind, in einen Steuercode um. Der Steuercode ist derart konfiguriert, dass dessen Ausführung auf der fertigenden Maschine 10 zu einem gefertigten Bauteil 1 führt, das die im digitalen Konstruktionsmodell 2 farbcodiert enthaltenen Informationen aufweist.

Es versteht sich, dass das Verfahren zur Herstellung eines Bauteils 1 nicht auf eine einzelne Maschine 10 beschränkt sein muss, sondern der Prozess nacheinander auf mehreren Maschinen 10 vollzogen werden kann.

Das System 20 zur Herstellung eines Bauteils 1 kann auch eine Messeinrichtung 12 umfassen, mittels der ein durch zumindest eine Bearbeitungsmaschine 10 hergestelltes Bauteil 1 vermessen werden kann, insbesondere derart, ob ein dreidimensionaler Bereich 1.1 des Bauteils 1 eine durch das Konstruktionsmodell 2 vorgegebene Materialeigenschaft aufweist.

Der Messeinrichtung 12 kann eine weitere Steuereinheit 13 zugeordnet sein, die an einer Schnittstelle 13.1 das Konstruktionsmodell 2 des Bauteils 1 oder davon abgeleitete Informationen (z.B. bereitgestellt durch das CAD-System) empfängt.

Die Messeinrichtung 12 ist dazu ausgebildet, das Bauteil 1 gesteuert durch die Steuereinheit 13 zu vermessen. Dazu werden folgende Schritte vollzogen:
Zunächst wird das Farbtableau 3 umfassend eine Vielzahl von gemäß einer Farbcodierungssystematik vergebenen Farben 3.1 geladen. Unter "Laden" wird jeglicher Prozess verstanden, mittels dem die Steuereinheit Zugriff auf das Farbtableau 3 hat. Wie zuvor beschrieben, ist den Farben 3.1 des Farbtableaus 3 jeweils eine Information zugeordnet, die eine Materialeigenschaft eines dreidimensionalen Bereichs 1.1 des Bauteils 1 definiert.

Zudem wird das digitale Konstruktionsmodell 2 des Bauteils 1 geladen, beispielsweise über die Schnittstelle 13.1. Das Bauteil 1 umfasst mehrere dreidimensionale Bereiche 1.1, die dreidimensionalen Bereichen 2.1 im Konstruktionsmodell 2 entsprechen und denen durch die Farbcodierung eine Materialeigenschaft zugeordnet ist.

Diese die Materialeigenschaft definierende Information des dreidimensionalen Bereichs 2.1 des Konstruktionsmodells 2 wird durch die Steuereinheit 13 mittels des Farbtableaus 3 bestimmt, und zwar indem ermittelt wird, welche Materialeigenschaft mit der Farbe 3.1, die dem dreidimensionalen Bereich 2.1 des Konstruktionsmodells 2 zugeordnet ist, im Farbtableau 3 verknüpft ist.

Zuletzt wird zumindest ein Messschritt an dem dreidimensionalen Bereich 1.1 des Bauteils 1 durchgeführt. Dabei wird geprüft, ob die Materialeigenschaft, die durch die Farbe 3.1 des dreidimensionalen Bereich 2.1 des Konstruktionsmodells 2 definiert wird, im entsprechenden dreidimensionalen Bereich 1.1 des Bauteils 1 eingehalten ist. Es versteht sich, dass iterativ eine Vielzahl derartiger Messschritte vollzogen werden, wenn ein Bauteil mit einer Vielzahl von dreidimensionalen Bereichen 1.1 mit unterschiedlichen Materialeigenschaften zu vermessen ist.

Fig. 8 zeigt ein Blockdiagramm, das die Schritte des Verfahrens zur Steuerung eines Herstellungsprozesses eines Bauteils 1 verdeutlicht.

Zunächst wird ein Farbtableau umfassend eine Vielzahl von gemäß einer Farbcodierungssystematik vergebenen Farben bereitgestellt, wobei den Farben jeweils eine Information zugeordnet ist, die eine Materialeigenschaft eines dreidimensionalen Bereichs des Bauteils charakterisiert (S10). Die Bereitstellung des Farbtableaus kann beispielsweise durch ein Ablegen in einer Speichereinheit erfolgen.

Des Weiteren wird ein dreidimensionales digitales Konstruktionsmodell des zu fertigenden Bauteils bereitgestellt (S11). Die Bereitstellung kann beispielsweise durch ein Ablegen des digitalen Konstruktionsmodells in einer Speichereinheit erfolgen. Zumindest einem dreidimensionalen Bereich des digitalen Konstruktionsmodells sind eine oder mehrere Farben des Farbtableaus zugeordnet, so dass über die zumindest eine Farbe mittels des Farbtableaus dem entsprechenden dreidimensionalen Bereich des zu fertigenden Bauteils eine Materialeigenschaft zugeordnet ist.

Anschließend wird ein Steuercode für eine das Bauteil fertigende Maschine erzeugt (S12). Dabei wird beim Erzeugen des Steuercodes die Materialeigenschaft, die der dreidimensionale Bereich des zu fertigenden Bauteils aufweisen soll, aus dem Farbtableau mittels der zumindest einen Farbe, die dem dreidimensionalen Bereich des digitalen Konstruktionsmodells des Bauteils zugeordnet ist, ausgelesen. Basierend darauf wird der Steuercode für die Maschine derart erzeugt, dass bei einer Herstellung des Bauteils durch die Maschine basierend auf dem Steuercode der dreidimensionale Bereich des Bauteils die aus dem Farbtableau ausgelesene Materialeigenschaft aufweist.

Zuletzt wird ein von der Bearbeitungsmaschine vollzogener Prozess basierend auf dem Steuercode gesteuert (S13).

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Bauteil
- 1.1: dreidimensionaler Bereich des Bauteils
- 2: Konstruktionsmodell
- 2.1: dreidimensionaler Bereich des Konstruktionsmodells
- 2.2: diskreter Volumenbereich
- 3: Farbtableau
- 3.1: Farbe
- 4: Farbleiter
- 4a: erste Farbleiter
- 4b: zweite Farbleiter
- 4.1: Startfarbe
- 4.2: Endfarbe
- 5: Farbcode
- 5.1: erster Farbcodewert
- 5.2: zweiter Farbcodewert
- 5.3: dritter Farbcodewert

- 10: Maschine
- 10.1: Abgabeeinheit
- 10.2: Aushärteeinheit
- 11: Steuereinheit
- 11.1: Schnittstelle
- 12: Messeinrichtung
- 13: Steuereinheit
- 13.1: Schnittstelle
- 20: System

## Patentansprüche

1. Computerimplementiertes Verfahren zur Steuerung eines Prozesses zur Herstellung eines Bauteils (1), umfassend folgende Schritte:
- Bereitstellen eines Farbtableaus (3) umfassend eine Vielzahl von gemäß einer Farbcodierungssystematik vergebenen Farben (3.1), wobei den Farben (3.1) jeweils eine Information zugeordnet ist, die eine Materialeigenschaft eines dreidimensionalen Bereichs (1.1) des Bauteils (1) charakterisiert (S10);
- Bereitstellen eines dreidimensionalen digitalen Konstruktionsmodells (2) des zu fertigenden Bauteils (1) (S11), wobei zumindest einem dreidimensionalen Bereich (2.1) des digitalen Konstruktionsmodells (2) eine oder mehrere Farben (3.1) des Farbtableaus (3) zugeordnet sind, so dass über die zumindest eine Farbe (3.1) mittels des Farbtableaus (3) dem entsprechenden dreidimensionalen Bereich (1.1) des zu fertigenden Bauteils (1) eine Materialeigenschaft zugeordnet ist;
- Erzeugen eines Steuercodes für eine das Bauteil (1) fertigende Maschine (10), wobei beim Erzeugen des Steuercodes die Materialeigenschaft, die der dreidimensionale Bereich (1.1) des zu fertigenden Bauteils (1) aufweisen soll, aus dem Farbtableau (3) mittels der zumindest einen Farbe (3.1), die dem dreidimensionalen Bereich (2.1) des digitalen Konstruktionsmodells (2) des Bauteils (1) zugeordnet ist, ausgelesen wird und basierend darauf der Steuercode für die Maschine (10) derart erzeugt wird, dass bei einer Herstellung des Bauteils (1) durch die Maschine (10) basierend auf dem Steuercode der dreidimensionale Bereich (1.1) des Bauteils (1) die aus dem Farbtableau (3) ausgelesene Materialeigenschaft aufweist (S12);
- Steuern eines von der Maschine (10) vollzogenen Prozesses basierend auf dem erzeugten Steuercode (S13).

2. Verfahren nach Anspruch 1, **dadurch gekennzeichnet, dass** nach dem Schritt des Steuerns eines von der Maschine (10) vollzogenen Prozesses ein Messprozess an dem Bauteil vollzogen wird, bei dem anhand der zumindest einen Farbe (3.1), die dem dreidimensionalen Bereich (2.1) des digitalen Konstruktionsmodells (2) zugeordnet ist, geprüft wird, ob bei dem entsprechenden dreidimensionalen Bereich (1.1) des Bauteils (1) die Materialeigenschaft, die durch die zumindest eine Farbe (3.1) definiert wird, erfüllt ist.

3. Verfahren nach Anspruch 1 oder 2, **dadurch gekennzeichnet, dass** das dreidimensionale digitale Konstruktionsmodell (2) eine Vielzahl von diskreten Volumenbereichen (2.2) aufweist, die diskrete dreidimensionale Volumenbereiche des zu fertigenden Bauteils (1) repräsentieren und dass den diskreten Volumenbereichen (2.2) des digitalen Konstruktionsmodells (2) jeweils eine Farbe (3.1) des Farbtableaus (3) zugeordnet ist, so dass über die Farbe (3.1) mittels des Farbtableaus (3) dem diskreten Volumenbereich des zu fertigenden Bauteils (1) jeweils eine Materialeigenschaft zugeordnet ist.

4. Verfahren nach einem der vorhergehenden Ansprüche, **dadurch gekennzeichnet, dass** das dreidimensionale digitale Konstruktionsmodell (2) eine Vielzahl von diskreten Volumenbereichen (2.2) aufweist, die diskrete dreidimensionale Volumenbereiche des zu fertigenden Bauteils (1) repräsentieren und dass den diskreten Volumenbereichen (2.2) des digitalen Konstruktionsmodells (2) zumindest teilweise unterschiedliche Farben (3.1) zugeordnet sind, so dass die Volumenbereiche im zu fertigenden Bauteil (1), die diesen diskreten Volumenbereichen (2.2) des digitalen Konstruktionsmodells (2) entsprechen, unterschiedliche Materialeigenschaften aufweisen.

5. Verfahren nach Anspruch 3 oder 4, **dadurch gekennzeichnet, dass** das Steuern eines von der Maschine (10) vollzogenen Prozesses ortsselektiv basierend auf Materialeigenschaften erfolgt, die den diskreten Volumenbereichen (2.2) des dreidimensionalen digitalen Konstruktionsmodells (2) über die Farben (3.1) zugeordnet sind.

6. Verfahren nach einem der vorhergehenden Ansprüche, **dadurch gekennzeichnet, dass** die Materialeigenschaft, die durch die Farbe (3.1) repräsentiert wird, die Porosität des Materials, die mechanische Dämpfungseigenschaft, eine elektrische Eigenschaft, eine thermische Eigenschaft, eine optische Eigenschaft, eine magnetische Eigenschaft, die Härte des Materials, die Zähigkeit des Materials, die Elastizität des Materials und/oder der innere Spannungszustand des Materials ist oder dass die Materialeigenschaft einen Werkstoff, einen Werkstoffzustand, eine Materialstrukturinformation, einen Materialtyp und/oder die Phasen einer Legierung angibt.

7. Verfahren nach einem der vorhergehenden Ansprüche, **dadurch gekennzeichnet, dass** das Farbtableau (3) zumindest eine Farbleiter (4) umfasst, die eine Startfarbe (4.1), die ein erstes Ende der Farbleiter (4) definiert, und eine Endfarbe (4.2), die ein zweites Ende der Farbleiter (4) definiert, aufweist, wobei der Startfarbe (4.1) ein Startwert einer Materialeigenschaft, der Endfarbe (4.2) ein Endwert einer Materialeigenschaft und zumindest einem Teil der zwischen der Startfarbe (4.1) und der Endfarbe (4.2) liegenden Zwischenfarben ein Satz von Zwischenwerten der Materialeigenschaft zugeordnet sind, wobei die Zwischenwerte zwischen dem Startwert und dem Endwert der Materialeigenschaft definieren.

8. Verfahren nach Anspruch 7, **dadurch gekennzeichnet, dass** die Startfarbe (4.1) und die Endfarbe (4.2) der Farbleiter (4) durch einen numerischen Farbcode (5) umfassend zumindest drei Farbcodewerte (5.1, 5.2, 5.3) definiert sind und die Zwischenfarben der Farbleiter (4) dadurch gebildet werden, dass zwei Farbcodewerte (5.1, 5.2), die jeweils die Startfarbe (4.1) und die Endfarbe (4.2) aufweisen, auch bei den Zwischenfarben konstant gehalten werden und ein dritter Farbcodewert (5.3) zur Bildung unterschiedlicher Zwischenfarben variiert wird.

9. Verfahren nach Anspruch 8, **dadurch gekennzeichnet, dass** die aufeinander folgenden Zwischenfarben der Farbleiter (4) äquidistant angeordnet sind, wobei jeweils zwei in der Farbleiter (4) aufeinanderfolgende Zwischenfarben jeweils den gleichen, ganzzahligen Differenzwert des dritten Farbcodewerts (5.3) aufweisen.

10. Verfahren nach einem der vorhergehenden Ansprüche, **dadurch gekennzeichnet, dass** das Farbtableau (3) einen Satz von mehreren Farbleitern (4) umfasst, die jeweils eine Startfarbe (4.1) und eine Endfarbe (4.2) aufweisen, wobei die Startfarbe (4.1) und die Endfarbe (4.2) der Farbleiter (4) durch einen numerischen Farbcode (5) umfassend zumindest drei Farbcodewerte (5.1, 5.2, 5.3) definiert sind und dass die Farbleitern (4) des Satzes von Farbleitern jeweils eine Startfarbe (4.1) aufweisen, bei denen zumindest zwei Farbcodewerte (5.1, 5.3) gleich sind und ein dritter Farbcodewert (5.2) variiert wird, um die Startfarben (4.1) der Farbleitern (4) zu verändern.

11. Verfahren nach Anspruch 10, **dadurch gekennzeichnet, dass** jeder Farbleiter des Satzes von Farbleitern (4) unterschiedliche Arten von Materialinformationen zugeordnet sind.

12. System zur Herstellung eines Bauteils (1) umfassend zumindest eine Maschine (10), die einen Prozess zur Herstellung des Bauteils (1) vollzieht, und eine Steuereinheit (11), mittels der die Maschine (10) gesteuert wird, wobei das System (20) dazu konfiguriert ist, die folgenden Schritte zu vollziehen:
- Laden eines Farbtableaus (3) umfassend eine Vielzahl von gemäß einer Farbcodierungssystematik vergebenen Farben (3.1), wobei den Farben (3.1) jeweils eine Information zugeordnet ist, die eine Materialeigenschaft eines dreidimensionalen Bereichs (1.1) des Bauteils (1) charakterisiert;
- Laden eines dreidimensionalen digitalen Konstruktionsmodells (2) des zu fertigenden Bauteils (1), wobei zumindest einem dreidimensionalen Bereich (2.1) des digitalen Konstruktionsmodells (2) eine oder mehrere Farben (3.1) des Farbtableaus (3) zugeordnet sind, so dass über die zumindest eine Farbe (3.1) mittels des Farbtableaus (3) dem entsprechenden dreidimensionalen Bereich (1.1) des zu fertigenden Bauteils (1) eine Materialeigenschaft zugeordnet ist;
- Auslesen der Materialeigenschaft, die der dreidimensionale Bereich (1.1) des zu fertigenden Bauteils (1) aufweisen soll, aus dem Farbtableau (3) mittels der zumindest einen Farbe (3.1), die dem dreidimensionalen Bereich (2.1) des digitalen Konstruktionsmodells (2) des Bauteils (1) zugeordnet ist und Erzeugen eines Steuercodes für die das Bauteil (1) fertigende Maschine (10), wobei der Steuercode derart erzeugt wird, dass bei einer Herstellung des Bauteils (1) durch die Maschine (10) basierend auf dem Steuercode der dreidimensionale Bereich (1.1) des Bauteils (1) die aus dem Farbtableau (3) ausgelesene Materialeigenschaft aufweist;
- Steuern eines von der Maschine (10) vollzogenen Prozesses basierend auf dem erzeugten Steuercode.

13. System nach Anspruch 12, **dadurch gekennzeichnet, dass** eine Messeinrichtung (12) zur Messung von Materialeigenschaften eines von der Maschine (10) hergestellten Bauteils vorgesehen ist und dass die Messeinrichtung (12) eine Steuereinheit (13) aufweist, wobei die Steuereinheit (13) dazu konfiguriert ist, einen Messprozess zur Messung von Materialeigenschaften des Bauteils (1) zu steuern, wobei die Steuereinheit (13) dazu ausgebildet ist, die folgenden Schritte zu vollziehen:
- Laden eines Farbtableaus (3) umfassend eine Vielzahl von gemäß einer Farbcodierungssystematik vergebenen Farben (3.1), wobei den Farben (3.1) jeweils eine Information zugeordnet ist, die eine Materialeigenschaft eines dreidimensionalen Bereichs (1.1) des Bauteils (1) charakterisiert;
- Laden eines dreidimensionalen digitalen Konstruktionsmodells (2) des Bauteils (1), wobei zumindest einem dreidimensionalen Bereich (2.1) des digitalen Konstruktionsmodells (2) eine oder mehrere Farben (3.1) des Farbtableaus (3) zugeordnet sind, so dass über die zumindest eine Farbe (3.1) mittels des Farbtableaus (3) dem entsprechenden dreidimensionalen Bereich (1.1) des Bauteils (1) eine Materialeigenschaft zugeordnet ist;
- Auslesen der Materialeigenschaft, die ein dreidimensionaler Bereich (1.1) des Bauteils (1) aufweisen soll, aus dem Farbtableau (3) mittels der zumindest einen Farbe (3.1), die dem entsprechenden dreidimensionalen Bereich (2.1) des digitalen Konstruktionsmodells (2) des Bauteils (1) zugeordnet ist;
- Durchführen zumindest eines Messschrittes an dem dreidimensionalen Bereich (1.1) des Bauteils (1) und prüfen, ob der dreidimensionale Bereich (1.1) des Bauteils (1) die ausgelesene Materialeigenschaft aufweist.

14. System nach Anspruch 12 oder 13, **dadurch gekennzeichnet, dass** das dreidimensionale digitale Konstruktionsmodell (2) des Bauteils (1) eine Vielzahl von diskreten Volumenbereichen (2.2) aufweist, die diskrete dreidimensionale Volumenbereiche des zu fertigenden Bauteils (1) repräsentieren und dass den diskreten Volumenbereichen (2.2) des digitalen Konstruktionsmodells (2) zumindest teilweise unterschiedliche Farben (3.1) zugeordnet sind, so dass den diskreten Volumenbereichen (2.2) über das Farbtableau (3) unterschiedliche Materialeigenschaften zugeordnet sind und dass das System (20) dazu ausgebildet ist, das Bauteil (1) zumindest partiell mittels eines Herstellungsprozesses herzustellen, bei dem die Prozessparameter variierbar sind, wobei die Steuereinheit (11) dazu ausgebildet ist, die Prozessparameter gemäß dem Steuercode zu variieren, so dass dadurch diskrete dreidimensionale Volumenbereiche im zu fertigenden Bauteil (1) erzeugt werden, die die unterschiedlichen Materialeigenschaften, die den diskreten Volumenbereichen (2.2) des digitalen Konstruktionsmodells (2) zugeordnet sind, aufweisen.

15. System nach einem der Ansprüche 12 bis 14, **dadurch gekennzeichnet, dass** die Maschine (10) zur Durchführung eines additiven Fertigungsverfahrens ausgebildet ist.
